# EUROPÄISCHE PATENTANMELDUNG

(11) **EP 4 825 651 A1**
(43) Veröffentlichungstag der Anmeldung: **21.10.2026**
(21) Anmeldenummer: 26168368.4
(22) Anmeldetag: 27.03.2026
(51) Int. Cl.: B60M 1/30

(54) **STROMSCHIENENSYSTEM**

(30) Priorität: 15.04.2025 DE 102025114664
(71) Anmelder: REHAU Industries SE & Co. KG, 95111 Rehau (DE)
(72) Erfinder: Deistler, Thomas, 95158 Kirchenlamitz (DE)

(57) **Zusammenfassung**

Die Erfindung betrifft ein Stromschienensystem, insbesondere zur Bestromung von Gleisfahrzeugen, mit mindestens zwei hintereinander angeordneten, vorzugsweise metallischen, Stromschienen (2), mindestens einer Verbindungseinrichtung (6) zur elektrischen Verbindung der Stromschienen (2), wobei die Verbindungseinrichtung (6) als Kompensator zum Ausgleich von thermisch bedingten Längenänderungen der Stromschienen (2) ausgebildet ist, und wobei die Verbindungseinrichtung (6) Verbindungslaschen (10) aufweist, welche unter Bildung von, vorzugsweise im Querschnitt trapezförmig zueinander ausgerichteten, Kontaktierungsbereichen (12) an den Endabschnitten (4) der zu verbindenden Stromschienen (2) anliegen. Erfindungsgemäß ist mindestens eine Verbindungslasche (10) mit einer von deren Außenseite bis zu mindestens einem Kontaktierungsbereich (12) verlaufenden Kanalanordnung (14) ausgestattet, durch die Schmiermittel von der Außenseite der Verbindungslasche (10) hin zu diesem Kontaktierungsbereich (12) transportierbar ist.

## Beschreibung

Die Erfindung betrifft ein Stromschienensystem, insbesondere zur Bestromung von Gleisfahrzeugen, mit
- mindestens zwei hintereinander angeordneten, vorzugsweise metallischen, Stromschienen,
- mindestens einer Verbindungseinrichtung zur elektrischen Verbindung der Stromschienen,
- wobei die Verbindungseinrichtung als Kompensator zum Ausgleich von thermisch bedingten Längenänderungen der Stromschienen ausgebildet ist, und
- wobei die Verbindungseinrichtung Verbindungslaschen aufweist, welche unter Bildung von, vorzugsweise im Querschnitt trapezförmig zueinander ausgerichteten, Kontaktierungsbereichen an den Endabschnitten der zu verbindenden Stromschienen anliegen.

Stromschienensysteme der vorstehend genannten Art sind im Stand der Technik bekannt, beispielsweise aus der DE 20 2015 105 562 U1. Diese Systeme dienen insbesondere zur Bestromung von Zügen, beispielsweise U-Bahnen oder S-Bahnen, so dass hier eine Oberleitung entbehrlich ist. Die Stromschienensysteme werden parallel zu den Fahrschienen und in der Regel seitlich in Bodennähe angeordnet. Eine einzelne Stromschiene kann z.B. mindestens 10 m lang sein, wobei mehrere hintereinander angeordnete Stromschienen ohne Längenkompensation durch einfache Verbindungselemente miteinander verbunden werden können. Nach in der Regel 70 bis 100 m Streckenlänge ist jedoch eine Längenkompensation erforderlich, um thermisch bedingten Längenänderungen der Stromschienen Rechnung zu tragen. Bekanntlich führen niedrige Temperaturen zu einer Längenreduzierung der Stromschienen und hohe Temperaturen zu einer Längenausdehnung, wobei hohe Temperaturen klimatisch bedingt sein können, aber auch aus Wärmeverlusten bei starker elektrischer Bestromung resultieren. Für diese Längenkompensation bei gleichzeitiger Gewährleistung der elektrischen Verbindung zwischen den Stromschienen dient die genannte Verbindungseinrichtung. Die Verbindungslaschen dieser Einrichtung sind hierbei an der Gewährleistung der elektrischen Kontaktierung zwischen den Enden der Stromschienen beteiligt. Aufgrund der vorbeschriebenen Längenänderungen der Stromschienen muss grundsätzlich eine Kompensationsbewegung zwischen Stromschiene und Verbindungslasche möglich sein. Um die hierzu erforderliche Relativbewegung zwischen Stromschiene und Verbindungslasche problemlos zu ermöglichen, werden die entsprechenden Kontaktierungsbereiche zwischen Stromschiene und Verbindungslasche mit Schmiermittel, beispielsweise einem Schmierfett, Mehrzweckfett oder dergl., versehen. Damit dauerhaft eine ordnungsgemäße Funktion sichergestellt ist, muss das Stromschienensystem regelmäßig, beispielsweise zweimal pro Jahr, gewartet werden. Dazu müssen die Verbindungslaschen teilweise demontiert werden, um altes Schmiermittel und Schmutz zu entfernen sowie neues Schmiermittel auf die Kontaktierungsbereiche aufzubringen. Die darauffolgende Montage muss unter Berücksichtigung aller vorgeschriebenen Drehmomente für die Schraubverbindungen und Einstellungen erfolgen, so dass die Wartung insgesamt relativ aufwendig ist.

Vor diesem Hintergrund liegt der Erfindung die Aufgabe zugrunde, ein Stromschienensystem mit den eingangs beschriebenen Merkmalen anzugeben, welches eine vereinfachte Wartung ermöglicht.

Erfindungsgemäß wird diese Aufgabe dadurch gelöst, dass mindestens eine Verbindungslasche mit einer von deren Außenseite bis zu mindestens einem Kontaktierungsbereich verlaufenden Kanalanordnung ausgestattet ist, durch die Schmiermittel von der Außenseite der Verbindungslasche hin zu diesem Kontaktierungsbereich transportierbar ist. Mithilfe der erfindungsgemäßen Lehre gestaltet sich die vorbeschriebene Wartung wesentlich einfacher, da eine Demontage und erneute Montage hierfür vollständig entfallen kann. Das Schmiermittel kann einfach direkt in die Kanalanordnung appliziert werden, durch die es direkt zum Kontaktierungsbereich geleitet wird. Auch das separate Entfernen von altem Schmiermittel und Schmutz ist nicht mehr erforderlich, da das frische Schmiermittel durch die Kanalanordnung von innen eingebracht wird und dabei Schmutz sowie altes Schmiermittel automatisch wirksam nach außen drängt.

Vorzugsweise weist die Kanalanordnung mindestens eine in die Verbindungslasche eingebrachte Bohrung auf. Die Bohrung kann einen Durchmesser von bspw. 4 bis 8 mm, insbesondere 5 bis 6 mm, aufweisen. Dies ermöglicht eine fertigungstechnisch einfache Bereitstellung der Kanalanordnung. Hierbei können zur Bereitstellung der Kanalanordnung mehrere in unterschiedliche Richtungen ausgerichtete Bohrungen vorgesehen sein, die sich im Inneren der Verbindungslasche unter Bildung eines Kanalwinkels treffen und insbesondere einen Kanal für den Transport des Schmiermittels von der Außenseite der Verbindungslasche hin zu einem Kontaktierungsbereich bilden. Zweckmäßigerweise weist die Kanalanordnung mindestens zwei Ausflussbohrungen auf, die die Bereitstellung von Schmiermittel an zwei verschiedenen Kontaktierungsbereichen ermöglichen. Im Rahmen der Erfindung liegt es hierbei insbesondere, dass die mindestens zwei Ausflussbohrungen vom Kanalwinkel aus sich hin zu den voneinander beabstandeten Kontaktierungsbereichen erstrecken. In diesem Fall kann es zweckdienlich sein, wenn die Ausflussbohrungen unterschiedliche Durchmesser aufweisen, um die Verteilung des Schmiermittels hierüber gezielt einstellen zu können.

Vorzugsweise besitzt die Kanalanordnung an der Außenseite der Verbindungslasche ein Verschlusselement. Das Verschlusselement kann mittels eines Gewindes in die Verbindungslasche einschraubbar ausgebildet sein, wobei hierfür vorzugsweise das Gewinde in die Wandung der Kanalanordnung eingebracht ist. Insbesondere kann das Verschlusselement als Schmiernippel ausgebildet sein. Durch diesen Schmiernippel kann dann in vorteilhafter Weise das Schmiermittel von der Außenseite der Verbindungslasche durch die Kanalanordnung hin zu dem mindestens einen Kontaktierungsbereich transportiert werden, ohne dass hierfür eine Demontage der Verbindungseinrichtung erforderlich ist.

Zweckmäßigerweise ist zwischen den Enden der zu verbindenden Stromschienen ein Schienenverbindungsabschnitt der Verbindungseinrichtung angeordnet. Dieser Schienenverbindungsabschnitt entspricht zweckmäßigerweise in seinem Querschnitt der Geometrie der Stromschienen, so dass der während der Fahrt an den Stromschienen anliegende Stromabnehmer des Schienenfahrzeugs eine möglichst geringe Unregelmäßigkeit beim Durchfahren der Verbindungseinrichtung erfährt. Vorzugsweise sind die Enden der zu verbindenden Stromschienen sowie auch die diesen Enden zugewandten Stirnseiten des Schienenverbindungsabschnittes schräg zur Längsrichtung der Stromschienen ausgerichtet, beispielsweise unter einem Winkel von 25 - 35° zur Längsrichtung. Bei der vorbeschriebenen Ausführungsvariante der Erfindung existieren entsprechend in Fahrtrichtung gesehen zwei Spalte jeweils zwischen einem Schienenende und dem Schienenverbindungsabschnitt. Bei einer anderen Ausführungsvarianten der erfindungsgemäßen Lehre kann ein solcher Schienenverbindungsabschnitt aber auch fehlen. In diesem Fall liegt entsprechend nur ein Spalt zwischen den beiden einander zugewandten Enden der Stromschienen vor.

Grundsätzlich ist der Stromabnehmer des Schienenfahrzeugs in Fahrtrichtung gesehen länger ausgebildet als der Spalt zwischen den Endabschnitten und dem Schienenverbindungsabschnitt bzw. (bei fehlendem Schienenverbindungsabschnitt) zwischen den einander benachbarten Stromschienen. Hierdurch liegt auch im Bereich der Verbindungseinrichtung der Stromabnehmer stets bereichsweise an der Unterseite wenigstens einer Stromschiene an, so dass für den Stromabnehmer ein möglichst sanfter Übergang zwischen den Stromschienen gewährleistet ist.

Gemäß einer bevorzugten Ausführungsform der Erfindung sind an die Verbindungslaschen elektrische Kontaktelemente der Verbindungseinrichtung angeschlossen, die zur Stromüberbrückung zwischen den Stromschienen im Bereich der Verbindungseinrichtung dienen. Die elektrischen Kontaktelemente können als verformbare Kontaktbänder, insbesondere aus Kupfer, ausgebildet sein. Die verformbaren Kontaktbänder können hierbei jeweils aus mehreren übereinander liegenden Einzelbändern aufgebaut sein, z.B. mindestens 20, insbesondere mindestens 40 Einzelbändern. Hierdurch wird insgesamt die Flexibilität der Kontaktbänder erhöht. Die Kontaktbänder sind vorzugsweise mit oberseitigen Endstegen der Verbindungslaschen verbunden. Die Kontaktelemente können aufgrund ihrer Verformbarkeit thermisch bedingte Längenänderungen ebenfalls ausgleichen und sind zweckmäßigerweise hierzu schlaufenförmig angeordnet. Wegen der Kontaktelemente muss der vorbeschriebene Schienenverbindungsabschnitt auch lediglich die vorbeschriebene geometrische Funktion erfüllen und nicht gleichzeitig auch die elektrische Verbindung zwischen den Stromschienen gewährleisten.

Die Erfindung betrifft auch ein Verfahren zur Schmierung der vorbeschriebenen Verbindungseinrichtung eines Stromschienensystems nach Anspruch 11.

Im Folgenden wird die Erfindung anhand einer lediglich ein Ausführungsbeispiel darstellenden Zeichnung erläutert. Es zeigen schematisch:
- Fig. 1: ein erfindungsgemäßes Stromschienensystem (ausschnittsweise),
- Fig. 2: eine gegenüber der Fig. 1 reduzierte Ansicht des Stromschienensystems,
- Fig. 3: die Draufsicht A gemäß Fig. 1 und
- Fig. 4.: den Schnitt D - D in Fig. 3.

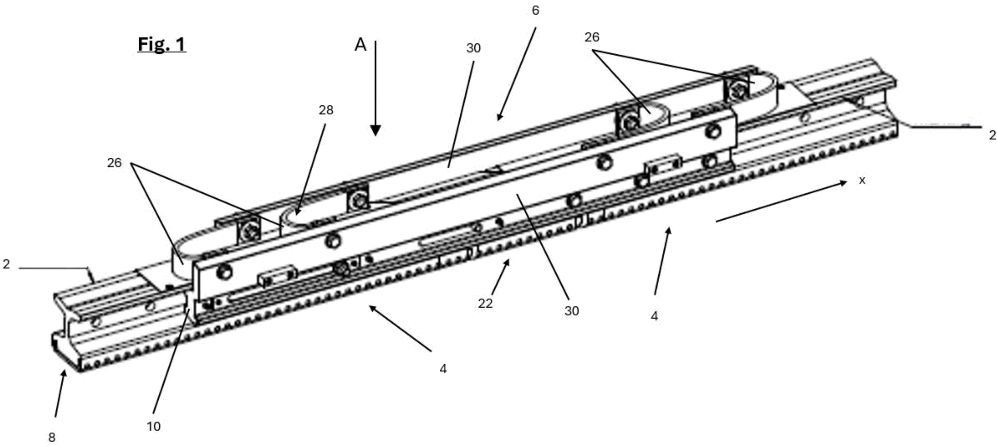

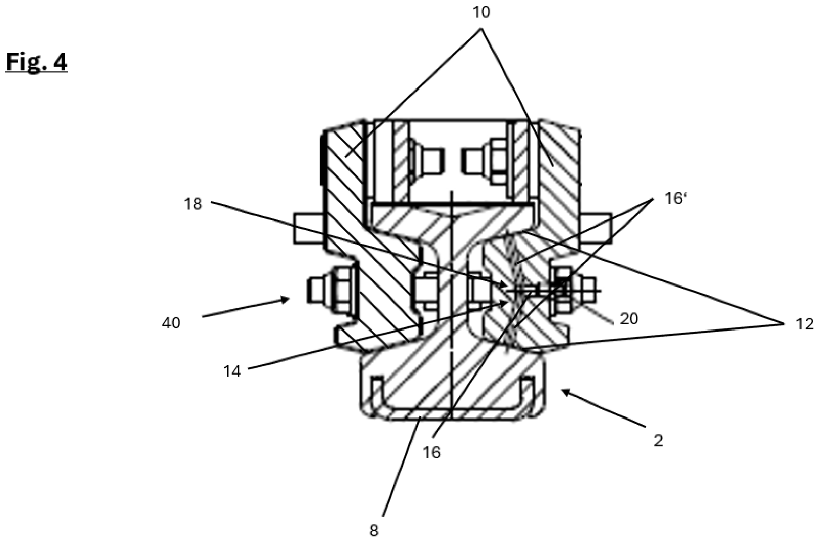

Die Fig. 1 zeigt ausschnittsweise ein erfindungsgemäßes Stromschienensystem, welches zur Bestromung eines (nicht dargestellten) Gleisfahrzeuges, beispielsweise einer U-Bahn dient. Das Stromschienensystem ist aus einer Vielzahl von hintereinander angeordneten metallischen Stromschienen 2 aufgebaut, von denen zwei mit ihren jeweils einander zugewandten Endabschnitten 4 in Fig. 1 gezeigt sind. Zur elektrischen Verbindung von zwei Stromschienen 2 ist nach einer Streckenlänge von z.B. 70 bis 100 m eine, in Fig. 1 ebenfalls gezeigte, Verbindungseinrichtung 6 vorgesehen. Die Verbindungseinrichtung 6 ist als Kompensator zum Ausgleich von thermisch bedingten Längenänderungen der Stromschienen 2 ausgebildet ist, worauf noch näher eingegangen wird. An der Unterseite der Stromschienen 2 ist jeweils ein elektrisches Kontaktprofil 8 vorgesehen (vergl. Fig. 4), an welchem unterseitig ein (nicht dargestellter) Stromabnehmer des Gleisfahrzeuges anliegt und während der Fahrt entlanggleitet.

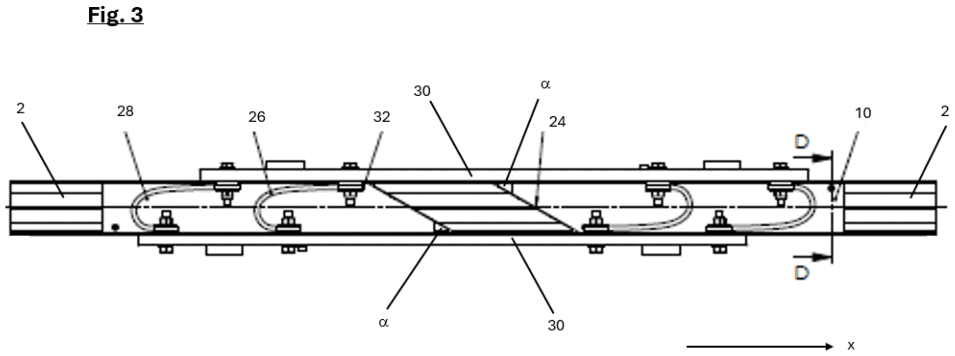

Wie anhand einer vergleichenden Betrachtung der Fig. 1 mit den Fig. 3 und insbesondere der Fig. 4 erkennbar ist, weist die Verbindungseinrichtung 6 Verbindungslaschen 10 auf, welche an den Endabschnitten 4 der zu verbindenden Stromschienen 2 unter Bildung von im Querschnitt trapezförmig zueinander ausgerichteten Kontaktierungsbereichen 12 anliegen. Fig. 4 zeigt ferner, dass eine Verbindungslasche 10 mit einer von deren Außenseite bis hin zu zwei Kontaktierungsbereichen 12 verlaufenden Kanalanordnung 14 ausgestattet ist, durch die (nicht näher dargestelltes) Schmiermittel von der Außenseite der Verbindungslasche 10 hin zu diesen Kontaktierungsbereichen 12 transportierbar ist. Die Kanalanordnung 14 weist mehrere in die Verbindungslasche 10 eingebrachte Bohrungen 16, 16' auf. Man erkennt, dass zur Bereitstellung der Kanalanordnung 14 mehrere in unterschiedliche Richtungen ausgerichtete Bohrungen 16, 16' vorgesehen sind, die sich im Inneren der Verbindungslasche 10 unter Bildung eines Kanalwinkels 18 treffen. Da im Ausführungsbeispiel drei Bohrungen 16, 16' aufeinandertreffen, ist der Kanalwinkel 18 hier als Verzweigung ausgebildet. Die gezeigte Kanalanordnung 14 weist zwei Ausflussbohrungen 16' auf, die die Bereitstellung von Schmiermittel an zwei verschiedenen voneinander beabstandeten und im Querschnitt trapezförmig zueinander ausgerichteten (Fig. 4) Kontaktierungsbereichen 12 ermöglichen. Die zwei Ausflussbohrungen 16' erstrecken sich von der Verzweigung 18 aus hin zu den voneinander beabstandeten Kontaktierungsbereichen 12. Die Kanalanordnung 12 weist ferner an der Außenseite der Verbindungslasche 10 ein Verschlusselement 20 auf. Dieses Verschlusselement 20 ist mittels eines (im Detail nicht näher gezeigten) Gewindes in das äußere Ende der das Schmiermittel zuführenden Zuflussbohrung 16 und damit in die Verbindungslasche 10 einschraubbar und im Ausführungsbeispiel als Schmiernippel ausgebildet.

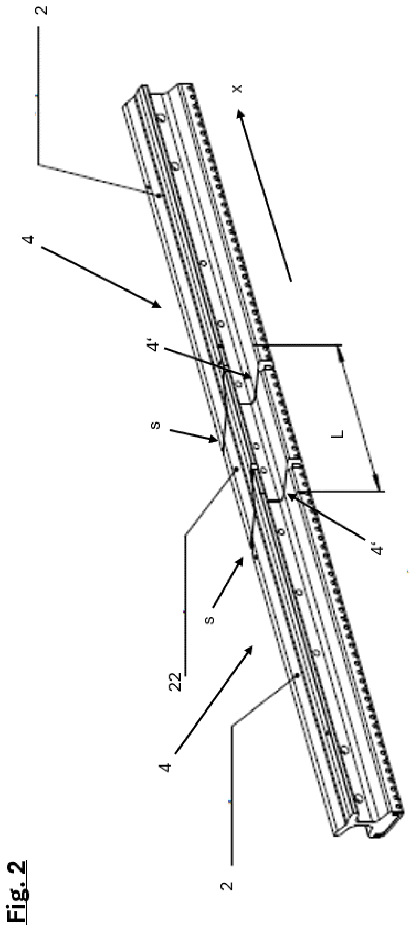

Einer vergleichenden Betrachtung der Fig. 1 bis 3 ist entnehmbar, dass zwischen den Enden 4' der zu verbindenden Stromschienen 2 ein Schienenverbindungsabschnitt 22 der Verbindungseinrichtung 6 angeordnet ist. Diese Enden 4' sowie auch die diesen Enden 4' zugewandten Stirnseiten 24 des Schienenverbindungsabschnittes 22 sind schräg zur Längsrichtung x der Stromschienen 2 ausgerichtet, im Ausführungsbeispiel unter Bildung eines Winkels α von 30° zur Längsrichtung x. Die axiale Länge des Schienenverbindungsabschnittes 22 ist kleiner als die in Fig. 2 gezeigte Längserstreckung L = 300 mm. Der Schienenverbindungsabschnitt 22 entspricht in seinem Querschnitt der Querschnittsgeometrie der Stromschienen 2 (s. Fig. 4). Die Fig. 2 zeigt das Stromschienensystem ohne die Verbindungslaschen 10. Bei der Darstellung gemäß Fig. 1, 2 liegen die Enden 4' der Stromschienen 2 fast am Schienenverbindungsabschnitt 22 an, d.h. die Spalte s dazwischen sind sehr klein, bspw. nur wenige mm breit. Hier sind entsprechend die Stromschienen 2 in einem nahezu maximal ausgedehnten Zustand, bedingt durch hohe Außentemperaturen bzw. vergleichsweise große Wärmeverluste aufgrund starker elektrischer Bestromung. Bei kühlen Außentemperaturen und niedriger Bestromung sind die Spalte s hingegen wesentlich größer, z.B. mehrere Zentimeter breit.

In Fig. 4 ist ferner erkennbar, dass die Kanalanordnung 14 lediglich bei der rechten Verbindungslasche 10 vorgesehen ist, bei der im Querschnitt gesehen linken Verbindungslasche 10 hingegen nicht. Dies hängt damit zusammen, dass die linke Verbindungslasche 10 über Verschraubungen 40 mit der in Fig. 4 gezeigten Stromschiene 2 fest verbunden ist (dies ist in den Fig. 1 bis 3 jeweils die rechte Stromschiene 2). Die in Fig. 4 gezeigte rechte Verbindungslasche 10 ist hingegen mit der anderen (in Fig. 1 bis 3 jeweils linken) Stromschiene 2 über Verschraubungen fest verbunden, so dass diese rechte Verbindungslasche 10 sich in der Querschnittsdarstellung gemäß Fig. 4 relativ zur dort gezeigten Stromschiene 2 verschieben können muss, um die gewünschte Längenkompensation zu gewährleisten. Entsprechend besteht hier das Bedürfnis, diese Verschiebungsbewegung durch den Einsatz von Schmiermittel zu erleichtern.

Anhand Fig. 1 und 3 ist erkennbar, dass an die Verbindungslaschen 10 elektrische Kontaktelemente 26 der Verbindungseinrichtung 6 angeschlossen sind, die zur Stromüberbrückung zwischen den Stromschienen 2 im Bereich der Verbindungseinrichtung 6 dienen. Die elektrischen Kontaktelemente 26 sind als verformbare Kontaktbänder, insbesondere aus Kupfer, ausgebildet sind, welche mit oberseitigen Endstegen 30 der Verbindungslaschen 10 verbunden sind. Die Kontaktelelemente 26 sind jeweils unter Bildung einer Schlaufe 28 montiert, über die thermisch bedingte Längenänderungen der Stromschienen 2 ausgeglichen werden können. Zur Stromüberbrückung zwischen zwei Stromschienen 2 sind mehrere Kontaktelemente 26 an einen gemeinsamen Endsteg 30 angeschlossen. Ferner stellen die Kontaktelemente 26 jeweils eine elektrisch leitende Verbindung zwischen zwei voneinander beabstandeten Endstegen 30 her. Die Kontaktelemente 26 sind hierzu endseitig jeweils mittels Schrauben 32 an einem Endsteg 30 befestigt.

Bei einem erfindungsgemäßen Verfahren zur Schmierung der in den Figuren dargestellten Verbindungseinrichtung 6 wird zur Schmierung Schmiermittel, insbesondere Schmierfett, über den Schmiernippel 20 am außenseitigen Ende der Kanalanordnung 14 appliziert und bis zu den Kontaktierungsbereichen 12 gepresst. Hierbei wird gleichzeitig altes Schmiermittel sowie auch Schmutz aus den Kontaktierungsbereichen 12 nach außen herausgepresst.

## Patentansprüche

1. Stromschienensystem, insbesondere zur Bestromung von Gleisfahrzeugen, mit
- mindestens zwei hintereinander angeordneten, vorzugsweise metallischen, Stromschienen (2),
- mindestens einer Verbindungseinrichtung (6) zur elektrischen Verbindung der Stromschienen (2),
- wobei die Verbindungseinrichtung (6) als Kompensator zum Ausgleich von thermisch bedingten Längenänderungen der Stromschienen (2) ausgebildet ist, und
- wobei die Verbindungseinrichtung (6) Verbindungslaschen (10) aufweist, welche unter Bildung von, vorzugsweise im Querschnitt trapezförmig zueinander ausgerichteten, Kontaktierungsbereichen (12) an den Endabschnitten (4) der zu verbindenden Stromschienen (2) anliegen,
**dadurch gekennzeichnet, dass** mindestens eine Verbindungslasche (10) mit einer von deren Außenseite bis zu mindestens einem Kontaktierungsbereich (12) verlaufenden Kanalanordnung (14) ausgestattet ist, durch die Schmiermittel von der Außenseite der Verbindungslasche (10) hin zu diesem Kontaktierungsbereich (12) transportierbar ist.

2. Stromschienensystem nach Anspruch 1, **dadurch gekennzeichnet, dass** die Kanalanordnung (14) mindestens eine in die Verbindungslasche (10) eingebrachte Bohrung (16, 16') aufweist.

3. Stromschienensystem nach Anspruch 2, **dadurch gekennzeichnet, dass** zur Bereitstellung der Kanalanordnung (14) mehrere in unterschiedliche Richtungen ausgerichtete Bohrungen (16, 16') vorgesehen sind, die sich im Inneren der Verbindungslasche (10) unter Bildung eines Kanalwinkels (18) treffen.

4. Stromschienensystem nach Anspruch 3, **dadurch gekennzeichnet, dass** die Kanalanordnung (14) mindestens zwei Ausflussbohrungen (16') aufweist, die die Bereitstellung von Schmiermittel an zwei verschiedenen, vorzugsweise voneinander beabstandeten, Kontaktierungsbereichen (12) ermöglichen.

5. Stromschienensystem nach einem der Ansprüche 1 bis 4, **dadurch gekennzeichnet, dass** die Kanalanordnung (14) an der Außenseite der Verbindungslasche (10) ein Verschlusselement (20) aufweist.

6. Stromschienensystem nach Anspruch 5, **dadurch gekennzeichnet, dass** das Verschlusselement (20) mittels eines Gewindes in die Verbindungslasche (10) einschraubbar ausgebildet ist.

7. Stromschienensystem nach Anspruch 5 oder 6, **dadurch gekennzeichnet, dass** das Verschlusselement (20) als Schmiernippel ausgebildet ist.

8. Stromschienensystem nach einem der Ansprüche 1 bis 7, **dadurch gekennzeichnet, dass** zwischen den Enden (4') der zu verbindenden Stromschienen (2) ein Schienenverbindungsabschnitt (22) der Verbindungseinrichtung (6) angeordnet ist, wobei vorzugsweise diese Enden (4) sowie auch die diesen Enden (4) zugewandten Stirnseiten (24) des Schienenverbindungsabschnittes (22) schräg zur Längsrichtung (x) der Stromschienen (2) ausgerichtet sind.

9. Stromschienensystem nach einem der Ansprüche 1 bis 8, **dadurch gekennzeichnet, dass** an die Verbindungslaschen (10) elektrische Kontaktelemente (26) der Verbindungseinrichtung (6) angeschlossen sind, die zur Stromüberbrückung zwischen den Stromschienen (2) im Bereich der Verbindungseinrichtung (6) dienen.

10. Stromschienensystem nach Anspruch 9, **dadurch gekennzeichnet, dass** die elektrischen Kontaktelemente (26) als verformbare Kontaktbänder, insbesondere aus Kupfer, ausgebildet sind, welche vorzugsweise mit oberseitigen Endstegen (30) der Verbindungslaschen (10) verbunden sind.

11. Verfahren zur Schmierung der Verbindungseinrichtung (6) eines Stromschienensystems nach einem der Ansprüche 1 bis 10, wobei zur Schmierung Schmiermittel am außenseitigen Ende der Kanalanordnung (14) appliziert und bis zum entsprechenden Kontaktierungsbereich (12) gepresst wird.
